# EUROPÄISCHE PATENTSCHRIFT

(11) **EP 1 560 045 B1**
(45) Veröffentlichungstag und Bekanntmachung des Hinweises auf die Patenterteilung: **07.01.2009**
(21) Anmeldenummer: 04290261.9
(22) Anmeldetag: 29.01.2004
(51) Int. Cl.: G02B 6/00, F21V 9/08

(54) **Beleuchtungsvorrichtung insbesondere für ein Kraftfahrzeug-Armaturenbrett**
Lighting device, particularly for a dashboard for a motor vehicle
Dispositif d'éclairage,en pariculier pour un tableau de bord pour véhicule à moteur

(43) Veröffentlichungstag der Anmeldung: 03.08.2005
(73) Patentinhaber: Behr France Rouffach SAS, 68250 Rouffach (FR)
(72) Erfinder: Eckerlen, Gerard, 68250 Rouffach (FR); Luttringer, Christophe, 68500 Berrwiller (FR)
(74) Vertreter: Grauel, Andreas

(56) Entgegenhaltungen:
- EP-A- 0 532 975
- WO-A-84/00800
- DE-A- 3 535 881
- US-A- 5 217 286
- US-A- 6 123 442

## Beschreibung

Die Erfindung betrifft eine Beleuchtungsvorrichtung, insbesondere für ein Kraftfahrzeug-Armaturenbrett, gemäß dem Oberbegriff des Anspruchs 1.

Aus der DE 41 31 340 C1 ist ein durch einen Lichtleiter beleuchtbares Symbol einer Wandung bekannt. Hierbei ist ein durch einen Endabschnitt eines Lichtleiters in einer Wandung gestaltetes, beleuchtbares Symbol vorgesehen, das in der Tagesansicht und in der Nachtansicht eine bestimmbare eindeutige Farbe annehmen soll. Um dies zu gewährleisten, ist vorgeschlagen, das Symbol und den symbolgestaltenden Endabschnitt des Lichtleiters mit einer durchscheinenden Folie zu umschließen.

Eine derartige Beleuchtungsvorrichtung lässt daher noch Wünsche offen.

Es ist Aufgabe der Erfindung, eine verbesserte Beleuchtungsvorrichtung zur Verfügung zu stellen.

Diese Aufgabe wird gelöst durch eine Beleuchtungsvorrichtung mit den Merkmalen des Anspruchs 1. Vorteilhafte Ausgestaltungen sind Gegenstand der Unteransprüche.

Erfindungsgemäß ist eine Beleuchtungsvorrichtung, insbesondere für ein Kraftfahrzeug-Armaturenbrett, mit einem Lichtleiter, welcher Licht von einer Lichtquelle einer Instrumentenanzeige zuführt, vorgesehen wobei der Lichtleiter in einem lichtausleitenden Bereich gefärbt ist und hierbei zumindest bereichsweise auch eine Auffächerung der Lichtstrahlen erfolgt. Zu diesem Zweck weist gemäß der Erfindung der lichtausleitende, gefärbte Bereich prismenartig ausgestaltete Bereiche auf.

Bevorzugt ist an einem Ende des Lichtleiters eine Lichtquelle, insbesondere eine weiße Lichtquelle, vorzugsweise eine LED oder eine Glühlampe, angeordnet.

Das Licht tritt aus dem Lichtleiter bevorzugt über einen annähernd bogenförmigen Bereich aus, wobei zentral eine Zeigeranzeige angeordnet ist, die mit Hilfe des Lichtleiters indirekt beleuchtet wird.

Vorzugsweise handelt es sich bei dem Lichtleiter um ein Kunststoffteil. Dieses wird bevorzugt mittels Zwei- oder Mehrkomponenten-Spritzgießen hergestellt.

Eine derartige Beleuchtungsvorrichtung kann insbesondere zur Beleuchtung der Bedienungsanordnung einer Kraftfahrzeug-Klimaanlage verwendet werden.

Im Folgenden wird die Erfindung anhand eines Ausführungsbeispiels unter Bezugnahme auf die Zeichnung im Einzelnen erläutert. In der Zeichnung zeigen:
- Fig. 1: eine perspektivische Ansicht einer erfindungsgemäßen Beleuchtungsvorrichtung, und
- Fig. 2: einen Schnitt durch die Beleuchtungsvorrichtung von Fig. 1 entlang Linie II-II in Fig. 1.

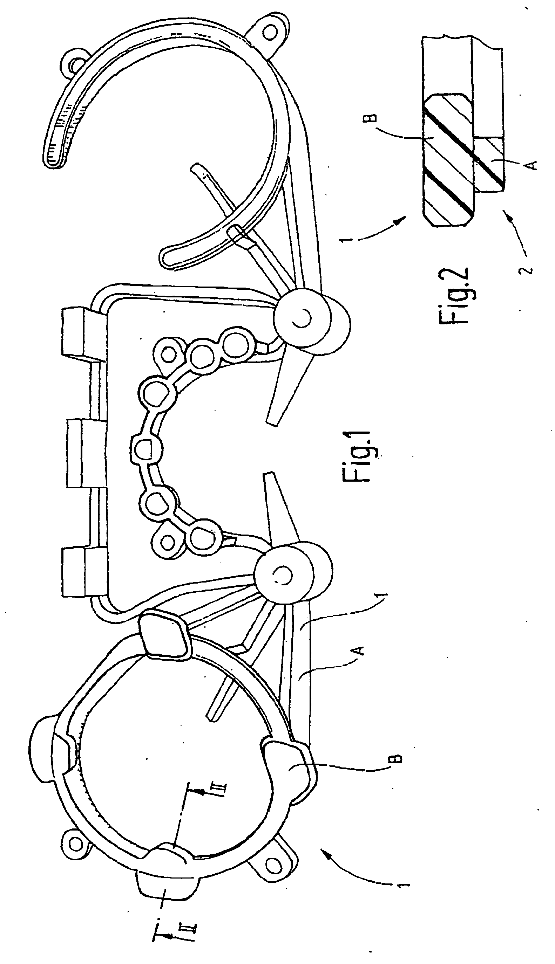

Eine Beleuchtungsvorrichtung 1 zur Beleuchtung der Instrumentenanzeigen in einem Kraftfahrzeug-Armaturenbrett weist einen Lichtleiter 2 zur Zuleitung des Lichts von einer Lichtquelle (nicht dargestellt), vorliegend einer LED, zu den mehreren voneinander etwas beabstandeten zu beleuchtenden Bereichen der Instrumentenanzeigen, welche insbesondere indirekt beleuchtet werden, auf. Hierbei umfasst der Lichtleiter 2 auch prismenartig ausgestaltete Bereiche, welche einer gezielten Lichtausleitung unter Auffächerung, der Lichtstrahlen und somit der Beleuchtung dienen. Um eine farbige Beleuchtung einzelner Bereiche zu ermöglichen, ist der Lichtausleitende prismenartige Bereich entsprechend eingefärbt ausgebildet, beispielsweise gelb oder rot. In den Figuren 1 und 2 ist der ungefärbte Bereich mit A und der gefärbte Bereich mit B bezeichnet. Die Herstellung erfolgt insbesondere mittels Zwei-Komponenten-Spritzgießen des den Lichtleiter 2 bildenden Kunststoffmaterials, wobei zuerst der ungefärbte Bereich A und direkt anschließend der gefärbte Bereich B gegossen wird.

Gemäß einer Variante sind in unterschiedlichen Bereichen, denen über den Lichtleiter Licht von einer Lichtquelle zugeführt wird, unterschiedlich eingefärbte Materialien vorgesehen, so dass verschiedenfarbiges Licht austritt und die Instrumentenanzeige indirekt beleuchtet.

## Patentansprüche

1. Beleuchtungsvorrichtung, insbesondere für ein Kraftfahrzeug-Armaturenbrett, mit einem Lichtleiter (2), welcher Licht von einer Lichtquelle einer Instrumentenanzeige zuführt, wobei der Lichtleiter (2) in einem lichtausleitenden Bereich gefärbt ist **dadurch gekennzeichnet, dass** der lichtausleitende, gefärbte Bereich (B) prismenartig ausgestaltete Bereiche zur gezielten Lichtausleitung unter Auffächerung der Lichtstrahlen aufweist.

2. Beleuchtungsvorrichtung nach Anspruch 1, **dadurch gekennzeichnet, dass** an einem Ende des Lichtleiters (2) eine Lichtquelle angeordnet ist.

3. Beleuchtungsvorrichtung nach Anspruch 2, **dadurch gekennzeichnet, dass** die Lichtquelle eine weiße Lichtquelle ist.

4. Beleuchtungsvorrichtung nach Anspruch 2 oder 3, **dadurch gekennzeichnet, dass** die Lichtquelle eine LED oder eine Glühlampe ist.

5. Beleuchtungsvorrichtung nach einem der vorhergehenden Ansprüche, **dadurch gekennzeichnet, dass** das Licht aus dem Lichtleiter (2) über einen annähernd bogenförmigen Bereich austritt.

6. Beleuchtungsvorrichtung nach einem der vorhergehenden Ansprüche, **dadurch gekennzeichnet, dass** der Lichtleiter (2) ein Kunststoffteil ist.

7. Beleuchtungsvorrichtung nach einem der vorhergehenden Ansprüche, **dadurch gekennzeichnet, dass** das Kunststoffteil mittels Zwei- oder Mehrkomponenten-Spritzgießen hergestellt ist.

## Claims

1. Lighting device, in particular for a dashboard in a motor vehicle, with a light conductor (2) which delivers light from a light source to an instrument display, such that the light conductor (2) is coloured in a light-emitting area, **characterised in that** the light-emitting, coloured area (B) comprises regions of prism-like design for the targeted emission of light, which spread out the light rays.

2. Lighting device according to Claim 1, **characterised in that** a light source is arranged at one end of the light conductor (2).

3. Lighting device according to Claim 2, **characterised in that** the light source is a source of white light.

4. Lighting device according to Claims 2 or 3, **characterised in that** the light source is an LED or an incandescent bulb.

5. Lighting device according to any of the preceding claims, **characterised in that** the light from the light conductor (2) emerges from an approximately curved region.

6. Lighting device according to any of the preceding claims, **characterised in that** the light conductor (2) is a plastic component.

7. Lighting device according to any of the preceding claims, **characterised in that** the plastic component is produced by means of two- or multi-component injection moulding.

## Revendications

1. Dispositif d'éclairage, en particulier pour le tableau de bord d'un véhicule automobile, comprenant un conducteur de lumière (2) qui fournit, à un affichage d'instrument, de la lumière provenant d'une source lumineuse, où le conducteur de lumière (2) est coloré dans une zone diffusant de la lumière,
**caractérisé en ce que** la zone colorée (B) diffusant de la lumière présente des zones configurées en forme de prisme, pour la diffusion appropriée de la lumière, obtenue par déploiement en éventail des rayons lumineux.

2. Dispositif d'éclairage selon la revendication 1, **caractérisé en ce qu'**une source lumineuse est disposée au niveau d'une extrémité du conducteur de lumière (2).

3. Dispositif d'éclairage selon la revendication 2, **caractérisé en ce que** la source lumineuse est une source lumineuse blanche.

4. Dispositif d'éclairage selon la revendication 2 ou 3, **caractérisé en ce que** la source lumineuse est une diode luminescente ou une lampe à incandescence.

5. Dispositif d'éclairage selon l'une quelconque des revendications précédentes, **caractérisé en ce que** la lumière sortant du conducteur de lumière (2) passe par une zone de forme presque arquée.

6. Dispositif d'éclairage selon l'une quelconque des revendications précédentes, **caractérisé en ce que** le conducteur de lumière (2) est une pièce en matière plastique.

7. Dispositif d'éclairage selon l'une quelconque des revendications précédentes, **caractérisé en ce que** la pièce en matière plastique est fabriquée par moulage par injection à deux composants ou plus.
